# EUROPEAN PATENT APPLICATION

(11) **EP 4 421 210 A1**
(43) Date of publication of application: **28.08.2024**
(21) Application number: 23207267.8
(22) Date of filing: 01.11.2023
(51) Int. Cl.: C25B 1/04, C25B 9/73, C25B 15/02

(54) **WATER ELECTROLYSIS SYSTEM**

(30) Priority: 05.01.2023 JP 2023000471
(71) Applicant: TOYOTA JIDOSHA KABUSHIKI KAISHA, Toyota-shi, Aichi-ken, 471-8571 (JP)
(72) Inventor: KITAMURA, Nobuyuki, Toyota-shi,, 471-8571 (JP)
(74) Representative: J A Kemp LLP

(57) **Abstract**

Provided is a water electrolysis system (10) that obtains hydrogen by water electrolysis with a water electrolysis cell (13) including a water electrolysis stack (12) having a plurality of the water electrolysis cells (13), a water supply side passage (30) for supplying water to the water electrolysis stack (12), a hydrogen side passage (40) for discharging the hydrogen obtained in the water electrolysis stack (12), a plurality of voltage sensors (22a) for measuring voltages for the respective water electrolysis cells (13) or for each group of the water electrolysis cells (13), and a control device (23), where the control device (23) is configured to acquire a voltage from each of the voltage sensors (22a), determine whether the voltage is equal to or higher than a predetermined value and notify that an overvoltage has been generated when it is determined that the voltage is equal to or higher than the predetermined value.

## Description

### BACKGROUND OF THE INVENTION

### 1. Field of the Invention

The present disclosure relates to a water electrolysis system.

### 2. Description of Related Art

In Japanese Unexamined Patent Application Publication No. 2020-084259, it is disclosed that a water electrolysis device includes a control device that controls operations of a plurality of PEM type water electrolysis stacks, and this control device carries out calculations to determine a state of deterioration from acquired resistance value and temperature, and issues a warning to prompt the replacement of a stack that has undergone a leveling of deterioration and reversible deterioration has progressed.

### SUMMARY OF THE INVENTION

The related art can only detect deterioration once it has reached a level in which changes in the resistance value and temperature of a water electrolysis stack become apparent.

The present disclosure provides a water electrolysis system capable of detecting a failure with higher accuracy.

An aspect of the invention relates to a water electrolysis system that obtains hydrogen by water electrolysis with a water electrolysis cell, the water electrolysis system including a water electrolysis stack, a water supply side passage, a hydrogen side passage, a plurality of voltage sensors, and a control device. The water electrolysis stack has a plurality of the water electrolysis cells. The water supply side passage is for supplying water to the water electrolysis stack. The hydrogen side passage is for discharging the hydrogen obtained in the water electrolysis stack from the water electrolysis stack. The voltage sensors are for measuring voltages for the respective water electrolysis cells or for each group of the water electrolysis cells. The control device is configured to acquire a voltage from each of the voltage sensors, determine whether the voltage is equal to or higher than a predetermined value and notify that an overvoltage has been generated when it is determined that the voltage is equal to or higher than the predetermined value.

In the aspect, when water electrolysis is performed by a steady operation with the water electrolysis system, the control device may be configured to, based on an IV characteristic of the water electrolysis cell acquired in advance, notify that the overvoltage has been generated when a voltage that is equal to or higher than a first threshold higher than the IV characteristic is detected.

In the aspect, when water electrolysis is performed by the steady operation with the water electrolysis system, the control device may be configured to perform control that stops the water electrolysis system when a voltage that is equal to or higher than a second threshold higher than the first threshold is detected.

In the aspect, after stopping the water electrolysis by a steady operation of the water electrolysis system, when a voltage applied to the water electrolysis cell is lowered and the voltage of the water electrolysis cell rises again, the control device may be configured to purge part of accompanying water from the hydrogen side passage.

In the aspect, when purging of the accompanying water is performed, the control device may be configured to perform control on the water electrolysis stack to operate electrolysis.

In the aspect, while control to stop the water electrolysis system is performed, the control device may be configured to determine whether the voltage of the water electrolysis cell becomes lower than a third threshold within a certain period of time after a power supply stops voltage application and notify that that the voltage of the water electrolysis cell becomes lower than the third threshold when it is determined that the voltage of the water electrolysis cell becomes lower than the third threshold.

With the aspect of the present disclosure, a failure in the water electrolysis stack can be detected more accurately at an early stage.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram for illustrating a configuration of a water electrolysis system 10;
FIG. 2 is a conceptual diagram for illustrating a configuration of water electrolysis device 11;
FIG. 3 is a conceptual diagram for illustrating a configuration of a water electrolysis cell 13;
FIG. 4 is a conceptual diagram of a computer 23 (control device 23);
FIG. 5 is a diagram illustrating a flow of control S10 during a steady operation of the water electrolysis system;
FIG. 6 is a diagram for illustrating a reference IV characteristic, a first threshold range, and a second threshold range; and
FIG. 7 is a diagram for illustrating a flow of control S20 during stop processing of the water electrolysis system.

### DETAILED DESCRIPTION OF EMBODIMENTS

### 1. Configuration of Water Electrolysis System

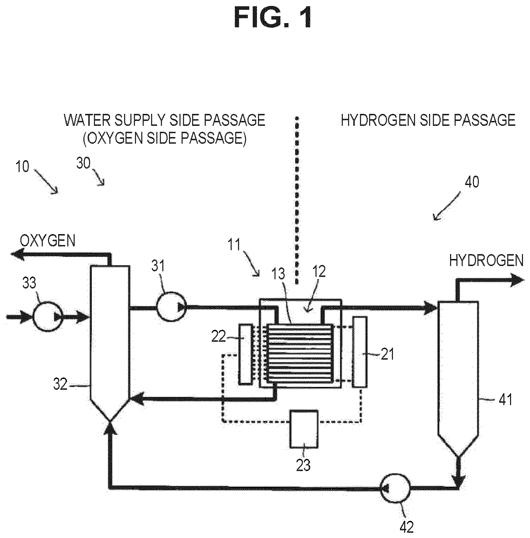

FIG. 1 conceptually illustrates a water electrolysis system 10 according to one embodiment.

In this embodiment, the water electrolysis system 10 has a water electrolysis device 11, a water supply side passage (oxygen side passage) 30, and a hydrogen side passage 40. In the water electrolysis system 10, water is supplied from the water supply side passage 30 to the water electrolysis stack 12 provided in the water electrolysis device 11 and energized to decompose the water into hydrogen and oxygen, and then hydrogen is obtained and discharged from the water electrolysis stack 12 to the hydrogen side passage 40.

### 1.1. Water Electrolysis Device

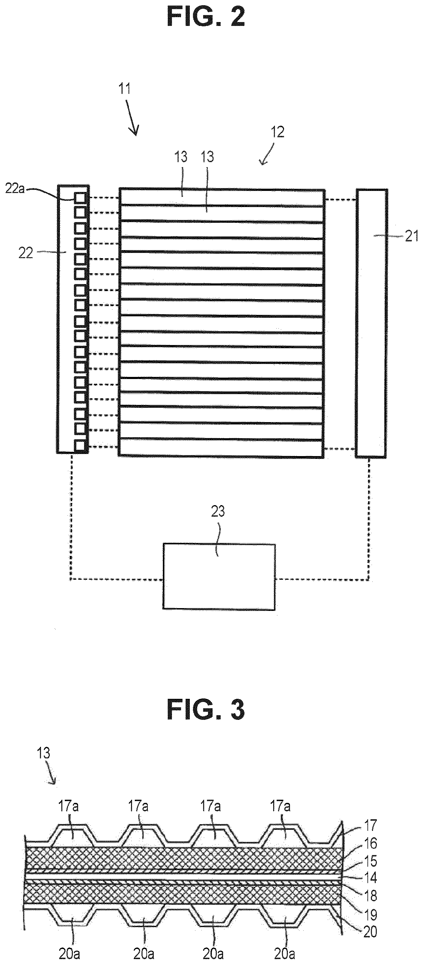

The water electrolysis device 11 includes the water electrolysis stack 12, a power supply 21, a cell monitor 22, and a control device 23 in this embodiment. Each element will be described below. FIG. 2 conceptually illustrates a configuration of the water electrolysis device 11.

### 1.1.1. Water Electrolysis Stack

The water electrolysis stack 12 is formed by stacking a plurality of water electrolysis cells 13. The water electrolysis cell 13 is a unit element that decomposes water into hydrogen and oxygen. FIG. 3 illustrates a part of a cross section of one water electrolysis cell 13.

As is well known, the water electrolysis cell 13 is composed of a plurality of layers in this embodiment, one of which serves as an oxygen generating electrode (anode) and the other serves as a hydrogen generating electrode (cathode) with a solid polymer electrolyte membrane 14 interposed therebetween.

A material constituting the solid polymer electrolyte membrane 14 is a solid polymer material, and examples thereof include a proton-conducting ion-exchange membrane made of a fluorine-based resin, a hydrocarbon-based resin material, or the like. It exhibits good proton conductivity (electrical conductivity) in wet conditions. A more specific example is Nafion (registered trademark), which is a perfluorosulfonic acid membrane.

The oxygen generating electrode (anode) includes an oxygen electrode catalyst layer 15, an oxygen electrode gas diffusion layer 16, and an oxygen electrode separator 17 in this order from the solid polymer electrolyte membrane 14 side.

The oxygen electrode catalyst layer 15 is a layer made of an electrode catalyst containing at least one or more noble metal catalyst such as Pt, Ru, and Ir and oxides thereof.

The oxygen electrode gas diffusion layer 16 is made of a member having gas permeability and electrical conductivity. Specifically, a porous conductive member made of metal fibers, metal particles, or the like can be exemplified.

The oxygen electrode separator 17 includes a flow path 17a through which water supplied to the oxygen electrode gas diffusion layer 16, generated oxygen, and surplus water flow.

The hydrogen generating electrode (cathode) is provided on a surface of the solid polymer electrolyte membrane 14 opposite to a surface on which the oxygen generating electrode is arranged, and a hydrogen electrode catalyst layer 18, a hydrogen electrode gas diffusion layer 19, and a hydrogen electrode separator 20 are provided in this order from the solid polymer electrolyte membrane 14 side.

For example, a layer containing Pt or the like can be exemplified as the hydrogen electrode catalyst layer 18.

The hydrogen electrode gas diffusion layer 19 consists of a member having gas permeability and electrical conductivity. Specifically, porous members such as carbon cloth and carbon paper can be exemplified.

The hydrogen electrode separator 20 is a member including a flow path 20a through which generated hydrogen and accompanying water flow.

The water (H₂O) supplied from the water supply side passage 30 to the flow path 17a of the oxygen electrode separator 17 is decomposed into oxygen, electrons, and protons (H⁺) in the oxygen electrode catalyst layer 15 to which a potential is applied by energizing from the power supply 21 between the oxygen generating electrode and the hydrogen generating electrode. In this case, the protons pass through the solid polymer electrolyte membrane 14 and move to the hydrogen electrode catalyst layer 18. The electrons separated by the oxygen electrode catalyst layer 15 reach the hydrogen electrode catalyst layer 18 through an external circuit. Then, protons receive electrons in the hydrogen electrode catalyst layer 18 to generate hydrogen. The generated hydrogen and accompanying water reach the hydrogen electrode separator 20, are discharged from the flow path 20a, and move to the hydrogen side passage 40. The oxygen and surplus water separated by the oxygen electrode catalyst layer 15 reach the oxygen electrode separator 17, are discharged from the flow path 17a, and move back to the water supply side passage 30.

### 1.1.2. Power Supply

The power supply 21 is a device that applies a voltage to the water electrolysis cell 13 to advance water electrolysis as described above, and a device provided in a known water electrolysis system can be applied as the power supply 21. However, in this embodiment, the power supply 21 can communicate with the control device 23 so that the control device 23 can control the application of the voltage.

### 1.1.3. Cell Monitor

The cell monitor 22 is a device that measures the voltage applied to the water electrolysis cell 13. It is not particularly limited as long as it can specifically measure the voltage of the water electrolysis cell 13, and a known device can be used. For example, a voltage sensor may be provided.

The cell monitor 22 may measure the voltage of each of the plurality of water electrolysis cells 13, or may measure the voltage of two or more water electrolysis cells 13 collectively. However, when measuring the voltages of two or more water electrolysis cells 13 together, the voltages that are supposed to be applied to respective water electrolysis cells 13 are averaged according to the collected number, so there is a possibility of causing a decrease in accuracy. Therefore, it is most preferable to obtain a voltage in each water electrolysis cell 13, and when the voltages of two or more water electrolysis cells are collectively obtained, the number of water electrolysis cells is preferably five or less.

The cell monitor 22 is configured to be communicable so that the obtained voltage data can be converted into a signal and transmitted to the control device 23.

### 1.1.4. Control Device

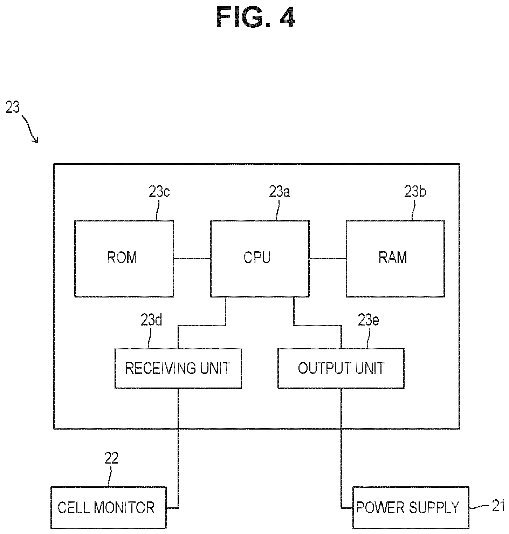

The control device 23 is a device that controls the water electrolysis system 10. The aspect of the control device 23 is not particularly limited, but typically it can be configured by a computer. FIG. 4 conceptually illustrates a configuration example of a computer 23 as the control device 23.

The computer 23 includes a central processing unit (CPU) 23a which is a processor, a random access memory (RAM) 23b functioning as a work area, a read-only memory (ROM) 23c as a storage medium, a receiving unit 23d which is an interface for receiving information in the computer 23 regardless of whether it is wired or wireless, and an output unit 23e which is an interface for sending information from the computer 23 to the outside regardless of whether it is wired or wireless.

The cell monitor 22 is communicably connected to the receiving unit 23d, and is configured to receive the voltage of the water electrolysis cell 13 as a signal.

On the other hand, the power supply 21 is communicably connected to the output unit 23e, and is configured to be able to control the voltage applied to the water electrolysis cell 13.

The computer 23 stores a computer program that executes specific instructions for each process for control performed in the water electrolysis system 10. In the computer 23, the CPU 23a, the RAM 23b, and the ROM 23c as hardware resources cooperate with the computer program. Specifically, the CPU 23a implements the functions by executing the computer program recorded in the ROM 23c in the RAM 23b functioning as a work area based on the signal representing the voltage of the water electrolysis cell 13 acquired from the cell monitor 22 via the receiving unit 23d. Information acquired or generated by the CPU 23a is stored in the RAM 23b. Then, based on the obtained result, a command is transmitted via the output unit 23e as necessary.

Specific contents of control of the water electrolysis system 10 will be described below.

### 1.2. Water Supply Side Passage (Oxygen Side Passage)

The water supply side passage (oxygen side passage) 30 is a path including piping for supplying water to the water electrolysis cells 13 of the water electrolysis stack 12 to obtain oxygen.

In this embodiment, water is supplied to the water electrolysis stack 12 by a pump 31 in the water supply side passage 30. A cooler for cooling water or an ion exchanger that removes ions contained in water may be arranged between the pump 31 and the water electrolysis stack 12 as necessary.

Further, in the water supply side passage 30, oxygen generated in the water electrolysis stack 12 and unused water are discharged from the water electrolysis stack 12 and supplied to a gas-liquid separator 32. Water and oxygen are separated in the gas-liquid separator 32, the separated oxygen is discharged, and the water is supplied to the pump 31 again. In addition, insufficient water is supplied from the pump 33 to the gas-liquid separator 32.

Each device described above is connected by piping to form a fluid passage. In addition to the above, known devices are arranged in the water supply side passage 30 as necessary.

### 1.3. Hydrogen Side Passage

The hydrogen side passage 40 is a passage including piping that removes hydrogen separated in the water electrolysis stack 12. On the hydrogen side passage 40, hydrogen and water discharged from the water electrolysis cell 13 of the water electrolysis stack 12 are supplied to a gas-liquid separator 41. Water and hydrogen are separated in the gas-liquid separator 41. The hydrogen separated in the gas-liquid separator 41 is dehumidified and stored in a tank. The water separated in the gas-liquid separator 41 is sent to the gas-liquid separator 32 of the water supply side passage 30 by a pump 42 and reused. In this case, if necessary, the separated water may pass through an ion separator before reaching the gas-liquid separator 32.

In the hydrogen side passage 40, these devices are connected by piping. In the hydrogen side passage 40, known devices other than those described above are arranged as necessary.

### 2. Control of Water Electrolysis System

### 2.1. Electrolytic Operation

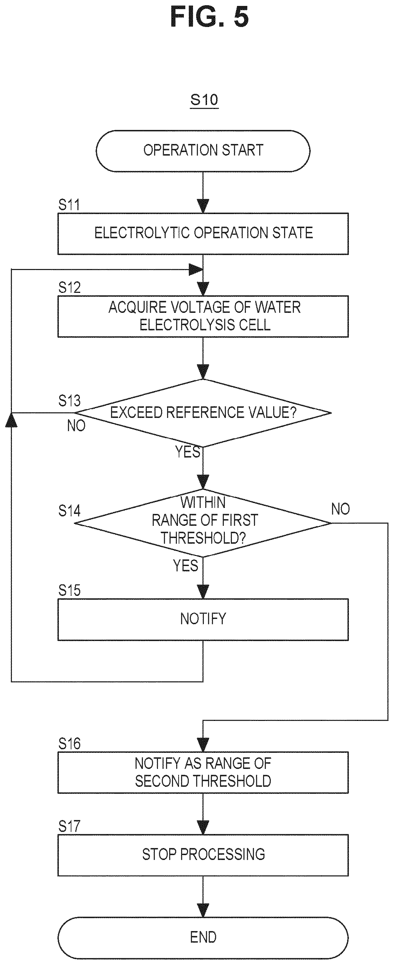

The performance of the water electrolysis system depends on the characteristics of the water electrolysis cell, and when a deteriorated water electrolysis cell continues to be used, overvoltage will increase power consumption in hydrogen production. In order to avoid such a situation, based on the voltage of the water electrolysis cell 13 obtained from the cell monitor 22, the control device 23 detects a state exceeding a preset voltage and performs control. FIG. 5 illustrates a flow of control S10 during an electrolytic operation (usual hydrogen production operation). As can be seen from FIG. 5, the control S10 has steps S11 to S17. In this embodiment, the computer program stored in the control device 23 described above is configured to be a specific instruction to the computer for executing each step of the control S10.

### 2.1.1. Step S11

In step S11, after the power supply 21 applies a voltage to the water electrolysis cell 13 to start the operation, a preparatory operation stage ends and the state becomes a usual electrolytic operation state.

### 2.1.2. Step S12

In step S12, the cell monitor 22 acquires the voltage of the water electrolysis cell 13. Here, voltage is acquired for each of a plurality of voltage sensors 22a. The acquired voltage data is transmitted to the control device 23 as a signal.

As described above, in this embodiment, the voltage is acquired for each of the water electrolysis cells 13 or for each group of the plurality of water electrolysis cells, and the voltage of the water electrolysis cell 13 is acquired for each stacked position.

### 2.1.3. Step S13

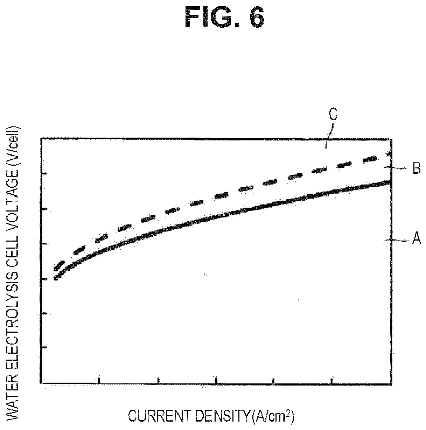

In step S13, from the voltage of each water electrolysis cell obtained in step S12, it is determined whether the voltage of each water electrolysis cell exceeds a reference value. Here, the reference value is determined from the previously obtained "current density (A/cm²)-per-water electrolysis cell voltage (V/cell)" (IV characteristics). When the voltage is measured collectively for a plurality of water electrolysis cells, it is the value obtained by dividing the obtained voltage by the number of water electrolysis cells collectively. FIG. 6 illustrates one example of the IV characteristics. Here, a range indicated by A where the voltage of the water electrolysis cell is lower than the solid line in FIG. 6 is the voltage of the reference value.

In step S13, when the voltage of the water electrolysis cell 13 satisfies the reference value, that is considered to be free from deterioration and malfunction, so it is determined as No, and the process returns to the process S12.

When the voltage of the water electrolysis cell 13 exceeds the reference value in step S13, it is determined as Yes, and the process proceeds to step S14.

### 2.1.4. Step S14, Step S15

In step S14, for the water electrolysis cell of which the voltage exceeds the reference value in step S13, it is determined whether the voltage is within a range of a first threshold. The range of the first threshold is a range of the voltage in which deterioration of the water electrolysis cell is presumed, but is not considered to be enough to stop the entire water electrolysis system. This is the voltage region of the water electrolysis cell between the solid line and the dashed line indicated by B in FIG. 6.

In step S14, when the voltage of the water electrolysis cell is within the range of the first threshold, it is determined as Yes, and the process proceeds to step S15 to notify that the water electrolysis cell has an overvoltage within the range of the first threshold. Although the notification method is not particularly limited, for example, an image display device (not illustrated) displays that an overvoltage in the range of the first threshold is generated and positional information (ID or the like) of the water electrolysis cell. Besides, or in addition to this, notification by sound or voice may be made.

In step S14, when the voltage of the water electrolysis cell exceeds the range of the first threshold, it is determined as No, and the process proceeds to step S16.

### 2.1.5. Step S16

In step S16, for the water electrolysis cell 13 of which the voltage is higher than the range of the first threshold in step S14, it is notified that the voltage reaches a range of the second threshold. The range of the second threshold is a range of the overvoltage at which the water electrolysis cell is presumed to be at a failure level, requiring the entire water electrolysis system to shut down. This is the region indicated by C in FIG. 6 where the voltage of the water electrolysis cell is higher than the dashed line. Then, in step S16, it is notified that an overvoltage of the second threshold is generated in the water electrolysis cell 13. Although the notification method is not particularly limited, for example, an image display device (not illustrated) displays that an overvoltage within the range of the second threshold is generated and positional information (ID or the like) of the water electrolysis cell. Besides, or in addition to this, notification by sound or voice may be made.

After the notification is made, the process proceeds to step S17.

### 2.1.6. Step S17

In step S17, in response to the fact that there is a water electrolysis cell 13 at the failure level in step S16, the operation of the water electrolysis system 10 is stopped. Stopping the water electrolysis process can be done as usual, and the application of voltage from the power supply 21 is stopped.

### 2.2. Stop Processing

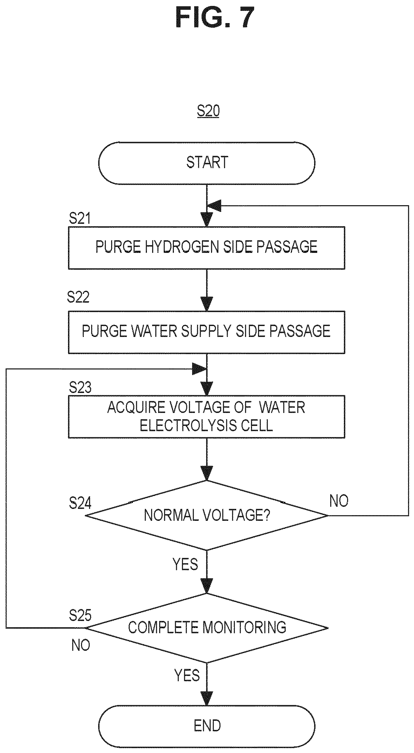

Although the stop processing can be performed as usual as in step S17 described above, when there is no accompanying water on the hydrogen generating electrode side of the water electrolysis cell during the stop processing, a fuel cell reaction (power generation reaction) may occur in the water electrolysis cell, and this can deteriorate the catalyst in the hydrogen electrode catalyst layer. Therefore, in this embodiment, in the stop processing, whether the fuel cell reaction has occurred is monitored, and when it has occurred, processing is performed to quickly resolve the reaction. FIG. 7 illustrates a flow of control S20 of the stop processing. As can be seen from FIG. 7, the control S20 includes steps S21 to S25.

### 2.2.1. Step S21

In step S21, the hydrogen side passage is purged. The accompanying water is discharged from the hydrogen side passage by purging from any position of the hydrogen side passage. As a result, the hydrogen pressure on the hydrogen generating electrode side of the water electrolysis cell 13 can be lowered. Here, although the accompanying water is purged while applying a voltage to the water electrolysis cell 13 by the power supply 21, in this case, the current density is set to 0.5 A/cm² or less, and electrolysis is performed under the condition that a certain level or more of cross leakage does not occur (or hydrogen generation is minimized), and further, the time is set to a short time of several seconds to several minutes. By purging the accompanying water from the hydrogen generating electrode, the fuel cell reaction described above can be suppressed. The purge can be performed by controlling an electromagnetic valve (not illustrated) provided on the hydrogen side passage with the control device 23.

In this case, an inert gas such as nitrogen may be injected into the hydrogen generating electrode side of the water electrolysis stack 12.

### 2.2.2. Step S22

In step S22, the water supply side passage is purged. Purging the water supply side passage discharges oxygen from the water supply side passage. Specifically, for example, pure water is sent to the water electrolysis stack 12 by the pump 31 with the control device 23, and oxygen remaining in the water electrolysis stack 12 is discharged to the gas-liquid separator 32 along with water electrolysis. As a result, the oxygen pressure on the oxygen generating electrode side of the water electrolysis cell 13 can be lowered.

### 2.2.3. Step S23

In step S23, the voltage of the water electrolysis cell 13 is acquired by the cell monitor 22. In this embodiment, the voltage is acquired for each of the voltage sensors 22a. The acquired voltage data is transmitted to the control device 23 as a signal.

As described above, in this embodiment, the voltage is acquired for each of the water electrolysis cells 13 or for each group of the plurality of water electrolysis cells, and the voltage is acquired for each stacked position of the water electrolysis cells 13.

### 2.3.4. Step S24

In step S24, it is determined whether the voltage of the water electrolysis cell 13 obtained in step S23 is normal. As described above, when the fuel cell reaction (power generation reaction) occurs in the water electrolysis cell during the stop processing, the catalyst in the hydrogen electrode catalyst layer may deteriorate. Whether this fuel cell reaction is occurring can be determined from the voltage of the water electrolysis cell 13. That is, when a voltage of the water electrolysis cell 13 rises again (for example, 0.1 V to 1.0 V per one water electrolysis cell), and that is detected during the stop processing, it can be determined that the reaction has occurred.

Therefore, in step S24, when the voltage of the water electrolysis cell 13 acquired in step S23 is equal to or lower than a set voltage, the voltage is normal, so it is determined as Yes, and the process proceeds to step S25.

On the other hand, when the voltage of the water electrolysis cell 13 acquired in step S23 is higher than the set voltage, the voltage is not normal and the fuel cell reaction is occurring, so it is determined as No, and the process proceeds to step S21 to perform purging again.

### 2.3.5. Step S25

In step S25, it is determined whether to complete monitoring when it is determined in step S24 that the voltage is normal. The completion of monitoring is determined by whether the stop processing of the water electrolysis system 10 has been completed, and when it is completed, it is determined as Yes and the process ends. On the other hand, when the stop processing has not been completed, it is determined as No and the process returns to step S23 to continue monitoring.

### 2.3.6. Others

When there is a cross leakage or a short circuit in the water electrolysis cell 13 during the stop processing, a sudden drop in voltage of the water electrolysis cell is observed immediately after the voltage application by the power supply 21 is stopped for the stop processing. Therefore, when the voltage of the water electrolysis cell becomes lower than the threshold within a certain period of time after the voltage application by the power supply 21 is stopped, it can be configured to notify that fact.

### 3. Effects etc.

With the water electrolysis system 10 of this embodiment and its control S10, deterioration of the water electrolysis cell 13 can be checked at an early stage, and thus it is easy to specify the deteriorated water electrolysis cell 13. Therefore, failures can be detected with higher accuracy, and the water electrolysis system 10 can be quickly stopped if necessary. Also, it is possible to do this during the electrolytic reaction.

When the control S20 is used, deterioration of the water electrolysis cell can be suppressed while the water electrolysis system 10 is stopped.

## Claims

1. A water electrolysis system (10) that obtains hydrogen by water electrolysis with a water electrolysis cell (13), the water electrolysis system (10) comprising:
a water electrolysis stack (12) having a plurality of water electrolysis cells (13);
a water supply side passage (30) that supplies water to the water electrolysis stack (12);
a hydrogen side passage (40) that discharges the hydrogen obtained in the water electrolysis stack (12) from the water electrolysis stack (12);
a plurality of voltage sensors (22a) that measures voltages for the respective water electrolysis cells (13) or for each group of the water electrolysis cells (13); and
a control device (23), wherein
the control device (23) is configured to acquire a voltage from each of the voltage sensors (22a), determine whether the voltage is equal to or higher than a predetermined value and notify that an overvoltage has been generated when it is determined that the voltage is equal to or higher than the predetermined value.

2. The water electrolysis system (10) according to claim 1, wherein when water electrolysis is performed by a steady operation with the water electrolysis system (10), the control device (23) is configured to, based on an IV characteristic of the water electrolysis cell (13) acquired in advance, notify that the overvoltage has been generated when a voltage that is equal to or higher than a first threshold higher than the IV characteristic is detected.

3. The water electrolysis system (10) according to claim 2, wherein when water electrolysis is performed by the steady operation with the water electrolysis system (10), the control device (23) is configured to perform control that stops the water electrolysis system (10) when a voltage that is equal to or higher than a second threshold higher than the first threshold is detected.

4. The water electrolysis system (10) according to any one of claims 1 to 3, wherein after stopping the water electrolysis by a steady operation of the water electrolysis system (10), when a voltage applied to the water electrolysis cell (13) is lowered and the voltage of the water electrolysis cell (13) rises again, the control device (23) is configured to purge part of accompanying water from the hydrogen side passage (40).

5. The water electrolysis system (10) according to claim 4, wherein when purging of the accompanying water is performed, the control device (23) is configured to perform control on the water electrolysis stack (12) to operate electrolysis.

6. The water electrolysis system (10) according to any one of claims 3 to 5, wherein while control to stop the water electrolysis system (10) is performed, the control device (23) is configured to determine whether the voltage of the water electrolysis cell (13) becomes lower than a third threshold within a certain period of time after a power supply (21) stops voltage application and notify that that the voltage of the water electrolysis cell (13) becomes lower than the third threshold when it is determined that the voltage of the water electrolysis cell (13) becomes lower than the third threshold.
